# DEMANDE DE BREVET EUROPEEN

(11) **EP 2 688 020 A1**
(43) Date de publication de la demande: **22.01.2014**
(21) Numéro de dépôt: 13176595.0
(22) Date de dépôt: 16.07.2013
(51) Int. Cl.: G06Q 10/06, B64F 5/00

(54) **Module, procédé d'analyse de messages de panne et programme d'ordinateur correspondant**

(30) Priorité: 17.07.2012 FR 1202023
(71) Demandeur: Dassault Aviation, 75008 Paris (FR)
(72) Inventeur: Bernard, Jean-Louis, 78117 Toussus le Noble (FR); Maitrehenry, Isabelle, 78800 Houilles (FR); Echeverria, Fabien, 75017 Paris (FR)
(74) Mandataire: Blot, Philippe Robert Emile

(57) **Abrégé**

Ce module (1) d'analyse d'un message de panne d'un appareil (2) incluant des systèmes fonctionnels comprend :
- un calculateur (10), comprenant des moyens d'accès (12) à des informations de maintenance (29) et des moyens d'analyse (40, 42) propres à déterminer sur la base desdites informations de maintenance (29), en fonction d'une requête, des informations pertinentes pour l'analyse dudit message,
- des moyens de restitution (44) desdites informations pertinentes.

La requête est parmi un premier, deuxième et troisième types selon lesquels lesdites informations sont pertinentes si :
- elles sont relatives à des messages de panne antérieurs similaires audit message,
- elles sont relatives à des opérations de maintenance réalisées sur un équipement du système fonctionnel incriminé par ledit message,
- elles sont relatives à des opérations de maintenance réalisées sur ledit appareil (2) affectant un système fonctionnel incriminé par ledit message.

## Description

La présente invention concerne un module d'analyse d'au moins un message de panne généré par un appareil d'un ensemble d'appareils, lesdits appareils comportant une pluralité de systèmes fonctionnels incluant un ou plusieurs équipements.

L'invention s'applique en particulier à des appareils tels que des aéronefs, par exemple un avion civil ou militaire. De tels appareils présentent un grand nombre de systèmes fonctionnels mécaniques, électriques et électroniques distincts, généralement interconnectés.

De tels appareils sont donc susceptibles d'engendrer une multitude d'anomalies distinctes qui résultent en une pluralité de symptômes observables sur la plateforme.

Les symptômes observables sont par exemple des messages numériques de pannes (ou « Fault Code ») qui identifient notamment les résultats d'autotest, les résultats de tests d'intégrité de chaînes électriques, ou encore les résultats de tests de capteurs et d'actionneurs.

A l'issue d'une mission de l'aéronef, l'équipe de maintenance en charge de la remise en vol de l'aéronef recueille les symptômes des anomalies éventuellement constatées lors de la mission. Ces symptômes se présentent notamment sous la forme de données de pannes enregistrées en vol, et de remarques formulées par le pilote et/ou par le mécanicien qui a pris en charge l'aéronef à l'issue de la mission.

Dans certains cas, le nombre et la variété des symptômes observés rendent extrêmement complexe la détermination du ou des systèmes en panne susceptibles d'engendrer les symptômes.

Par suite, les procédures de maintenance à effectuer sur l'appareil peuvent être très compliquées et requérir un temps d'analyse important.

Il est alors avantageux pour l'équipe de maintenance de s'appuyer sur des données de retour d'expérience, archivées dans différentes bases d'informations techniques et logistiques.

Ces bases comprennent notamment un système de restitution technique dans lequel sont archivées des données de panne enregistrées lors de vols d'aéronefs, telles que restituées au retour des missions de ces aéronefs, et un système de gestion de maintenance dans lequel sont archivées, à chaque retour de mission, les remarques formulées par le pilote et/ou par le mécanicien qui a pris en charge l'aéronef à l'issue de la mission, et des informations relatives aux opérations de maintenance réalisées sur l'aéronef et sur des équipements de l'aéronef dans le cadre de sa remise en l'état.

L'équipe de maintenance peut également s'appuyer sur des documents techniques gérés par des unités en charge du suivi et de la maintenance des matériels. Ces documents se présentent sous la forme de courriers, notes et directives techniques, bulletins, rapports, photos, mails...

Pour disposer d'un retour d'expérience lors d'un dépannage, c'est-à-dire pour déterminer les cas de panne similaires déjà rencontrés et les opérations de maintenance réalisées suite à chacun de ces cas déterminés, un opérateur de l'équipe de maintenance peut ainsi consulter les différentes bases d'informations mentionnées ci-dessus. Cette consultation s'apparente à une investigation en mode « pas à pas », lors de laquelle, à chaque étape de la consultation, l'opérateur interroge le système en fonction de l'analyse du résultat de la requête de l'étape précédente. Il navigue ainsi dans les données archivées en prenant soin de ne pas perdre le fil de sa recherche.

L'opérateur peut par ailleurs consulter ses notes personnelles, sur lesquelles il a auparavant consigné ses propres expériences de dépannage.

Ces solutions ne sont pas entièrement satisfaisantes.

En effet, les données archivées dans les systèmes de restitution technique et de gestion de maintenance sont destinées à être utilisées à des fins d'investigation, lors d'une recherche très ciblée, ou à des fins d'analyse, par exemple pour améliorer la fiabilité des matériels, au moyen d'outils spécifiques d'extraction de données, de stockage et d'analyse. Ainsi, les systèmes de restitution technique et de gestion de maintenance ne sont pas dotés de fonctions d'exploration des données archivées, de telle sorte que la recherche par un opérateur de cas de pannes similaires à la panne qu'il cherche à résoudre s'avère très longue et rarement exhaustive.

En outre, le système de restitution technique et le système de gestion de maintenance sont totalement dissociés, rendant difficile tout rapprochement par l'opérateur de données issues de chacun de ces deux systèmes.

Par ailleurs, la consultation par l'opérateur de ses notes personnelles ne lui permet pas de bénéficier de l'expérience d'autres opérateurs.

Le but de l'invention est donc de résoudre les problèmes mentionnés ci-dessus, et de faciliter et d'améliorer l'interprétation et l'exploitation des symptômes par l'équipe de maintenance, tout en rendant accessible dans l'instant l'analyse des symptômes.

A cet effet, l'invention a pour objet un module du type précité, **caractérisé en ce qu'il** comprend :
- un calculateur, comprenant :
   - des moyens d'accès à des informations de maintenance dudit ensemble d'appareils, comprenant des informations d'une base de données de messages de panne antérieurs audit message de panne enregistrés lors de missions d'appareils dudit ensemble, et des informations d'une base de données d'opérations de maintenance réalisées sur des appareils dudit ensemble,

   - des moyens d'analyse propres à déterminer sur la base desdites informations de maintenance, en fonction d'au moins une requête de recherche, des informations pertinentes pour permettre l'analyse dudit message de panne, selon un critère de pertinence associé à la requête de recherche,
- des moyens de restitution, propres à afficher à destination d'un opérateur des données déterminées en fonction desdites informations pertinentes,
et en ce que la requête de recherche est d'un type donné parmi :
- un premier type de requête de recherche associé à un premier critère de pertinence selon lequel lesdites informations sont pertinentes si elles comprennent des premières informations relatives à des messages de panne antérieurs similaires audit message de panne,
- ledit message de panne étant associé à au moins un système fonctionnel dudit appareil comprenant au moins un équipement, un deuxième type de requête de recherche associé à un deuxième critère de pertinence selon lequel lesdites informations sont pertinentes si elles comprennent des deuxièmes informations relatives à des opérations de maintenance antérieurement réalisées sur ledit ou chaque équipement dudit système fonctionnel sur ledit appareil ou un autre appareil dudit ensemble,
- ledit message de panne étant associé à au moins un système fonctionnel dudit appareil, un troisième type de requête de recherche associé à un troisième critère de pertinence selon lequel lesdites informations sont pertinentes si elles comprennent des troisièmes informations relatives à des opérations de maintenance réalisées sur ledit appareil affectant ledit système fonctionnel.

Suivant des modes particuliers de réalisation, le module comporte l'une ou plusieurs des caractéristiques suivantes :
- lesdits moyens d'analyse comprennent :
   - des moyens d'indexation desdites informations de maintenance, propres à générer et à mettre à jour de manière répétée un fichier d'index sur la base desdites informations de maintenance,
   - des moyens de recherche propres à extraire dudit fichier d'index lesdites informations pertinentes ;
- lesdites premières informations sont pertinentes si elles comprennent des informations relatives à des opérations de maintenance effectuées à la suite de chacun desdits messages de panne antérieurs similaires audit message de panne ;
- lesdites deuxièmes informations sont pertinentes si elles comprennent, pour le ou chaque équipement, des informations relatives à des interventions de maintenance réalisées sur des appareils dudit ensemble ayant incorporé ledit équipement, et/ou des informations relatives à des déposes dudit équipement et/ou des informations relatives à des interventions réalisées sur ledit équipement déposé ;
- lesdites troisièmes informations sont pertinentes si elles comprennent des informations relatives à des interventions de maintenance réalisées sur ledit appareil, et/ou des informations relatives à des déposes d'équipements dudit appareil, et/ou des informations relatives à des interventions réalisées sur les équipements déposés dudit appareil ;
- lesdits moyens de restitution comprennent des moyens de sélection, par un opérateur, d'un type de requête parmi lesdits premier et/ou deuxième et/ou troisième types, et des moyens d'affichage sélectifs desdites premières et/ou deuxièmes et/ou troisièmes informations respectivement ;
- lesdites informations de maintenance comprennent en outre des documents techniques relatifs à la maintenance des appareils dudit ensemble d'appareils ;
- lesdits moyens d'analyse sont propres à extraire desdites informations de maintenance, en fonction d'au moins une requête de recherche, des informations pertinentes relatives à des opérations de maintenance qui ont donné lieu à des remarques contenant au moins un mot prédéterminé ;
- lesdites informations pertinentes comprennent des messages de panne pertinents extraits de ladite base de données de messages de panne et des informations relatives à des opérations de maintenance pertinentes extraites de ladite base de données d'opérations de maintenance et en ce que lesdits moyens de recherche sont propres à associer à chacun desdits messages de panne pertinents des informations relatives à des opérations de maintenance pertinentes réalisées à la suite de chacun desdits messages de panne pertinents ;
- ledit appareil est un aéronef.

L'invention a également pour objet un procédé d'analyse d'au moins un message de panne généré par un appareil d'un ensemble d'appareils, lesdits appareils comportant une pluralité de systèmes fonctionnels incluant un ou plusieurs équipements, ledit procédé d'analyse étant **caractérisé en ce qu'il** comprend une étape d'extraction, en fonction d'au moins une requête de recherche, d'informations pertinentes pour permettre l'analyse dudit message de panne, selon un critère de pertinence associé à la requête de recherche, lesdites informations pertinentes étant extraites d'informations de maintenance dudit ensemble d'appareils comprenant des informations d'une base de données de messages de panne antérieurs audit message de panne enregistrés lors de missions d'appareils dudit ensemble, et des informations d'une base de données d'opérations de maintenance réalisées sur des appareils dudit ensemble, et en ce que la requête de recherche est d'un type donné parmi :
- un premier type de requête de recherche associé à un premier critère de pertinence selon lequel lesdites informations sont pertinentes si elles comprennent des premières informations relatives à des messages de panne antérieurs similaires audit message de panne,
- ledit message de panne étant associé à au moins un système fonctionnel dudit appareil comprenant au moins un équipement, un deuxième type de requête de recherche associé à un deuxième critère de pertinence selon lequel lesdites informations sont pertinentes si elles comprennent des deuxièmes informations relatives à des opérations de maintenance antérieurement réalisées sur ledit ou chaque équipement dudit système fonctionnel sur ledit appareil ou un autre appareil dudit ensemble,
- ledit message de panne étant associé à au moins un système fonctionnel dudit appareil, un troisième type de requête de recherche associé à un troisième critère de pertinence selon lequel lesdites informations sont pertinentes si elles comprennent des troisièmes informations relatives à des opérations de maintenance réalisées sur ledit appareil affectant ledit système fonctionnel.

Suivant des modes particuliers de réalisation, le procédé comporte l'une ou plusieurs des caractéristiques suivantes :
- ladite étape d'extraction comprend :
   - la génération d'un fichier d'index sur la base desdites informations de maintenance,
   - l'extraction depuis ledit fichier d'index desdites informations pertinentes.
- le procédé comprend une étape d'affichage, à destination d'un opérateur, de données déterminées en fonction desdites informations pertinentes.

L'invention a également pour objet un programme d'ordinateur pour un module d'analyse d'au moins un message de panne généré par un appareil d'un ensemble d'appareils, lesdits appareils comportant une pluralité de systèmes fonctionnels incluant un ou plusieurs équipements, ledit module d'analyse comportant des moyens d'accès à des informations de maintenance dudit ensemble d'appareils, comprenant des informations d'une base de données de messages de panne antérieurs audit message de panne enregistrés lors de missions d'appareils dudit ensemble, et des informations d'une base de données d'opérations de maintenance réalisées sur des appareils dudit ensemble, ledit programme d'ordinateur étant **caractérisé en ce qu'il** comprend des instructions logicielles, qui lorsqu'elles sont exécutées par des moyens de calcul dudit module d'analyse, sont propres à extraire desdites informations de maintenance, en fonction d'au moins une requête de recherche sélectionnée, des informations pertinentes pour permettre l'analyse dudit message de panne, selon un critère de pertinence associé à la requête de recherche, et en ce que la requête de recherche est d'un type donné parmi :
- un premier type de requête de recherche associé à un premier critère de pertinence selon lequel lesdites informations sont pertinentes si elles comprennent des premières informations relatives à des messages de panne antérieurs similaires audit message de panne,
- ledit message de panne étant associé à au moins un système fonctionnel dudit appareil comprenant au moins un équipement, un deuxième type de requête de recherche associé à un deuxième critère de pertinence selon lequel lesdites informations sont pertinentes si elles comprennent des deuxièmes informations relatives à des opérations de maintenance antérieurement réalisées sur ledit ou chaque équipement dudit système fonctionnel sur ledit appareil ou un autre appareil dudit ensemble,
- ledit message de panne étant associé à au moins un système fonctionnel dudit appareil, un troisième type de requête de recherche associé à un troisième critère de pertinence selon lequel lesdites informations sont pertinentes si elles comprennent des troisièmes informations relatives à des opérations de maintenance réalisées sur ledit appareil affectant ledit système fonctionnel.

Suivant un mode particulier de réalisation, lesdites instructions logicielles, lorsqu'elles sont exécutées par lesdits moyens de calcul dudit module d'analyse, sont propres à générer et à mettre à jour de manière répétée un fichier d'index sur la base desdites informations de maintenance, et à rechercher dans ledit fichier d'index lesdites informations pertinentes.

L'invention sera mieux comprise à la lecture de la description qui va suivre, donnée uniquement à titre d'exemple, et faite en se référant aux dessins annexés, sur lesquels :
- la Figure 1 est une vue schématique d'un module d'assistance selon l'invention ;
- les Figures 2 à 5 sont des schémas illustrant divers types de structures d'informations extraites par le module d'assistance selon l'invention ;
- la Figure 6 est une vue d'informations affichées par le module selon l'invention ;
- la Figure 7 est un organigramme d'un procédé selon l'invention.

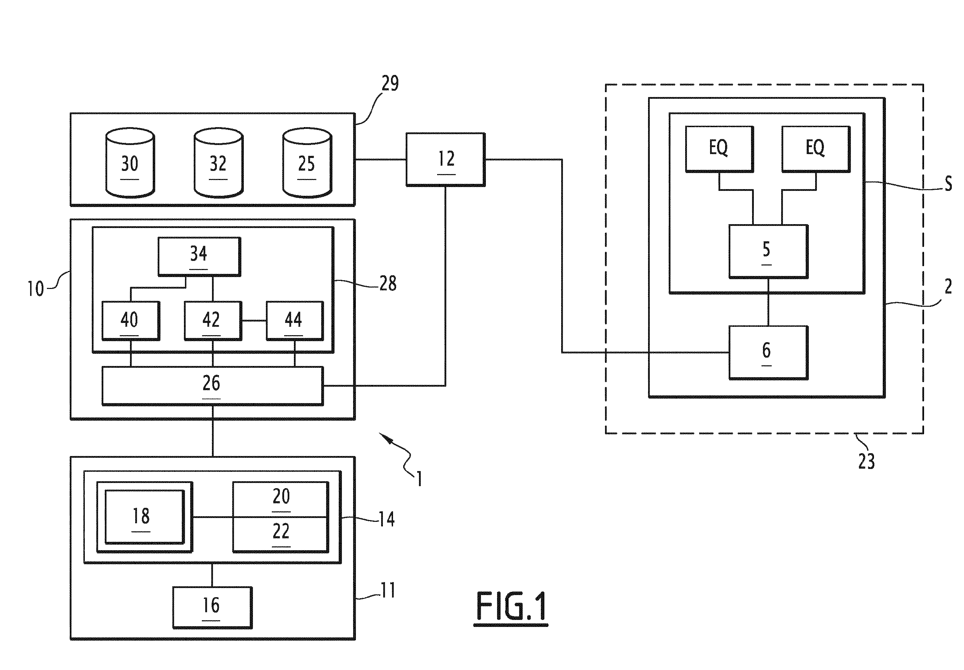

On a représenté sur la Figure 1, de manière schématique, un module 1 d'analyse adapté à la mise en oeuvre du procédé selon l'invention, pour l'analyse de messages enregistrés lors du vol d'un aéronef 2 d'une flotte.

L'aéronef 2 comprend une pluralité de systèmes fonctionnels S destinés au fonctionnement de l'aéronef 2. Ces systèmes fonctionnels comprennent notamment un système de conditionnement d'air, un système hydraulique, un système de commandes de vol et de circuit carburant...

Chacun de ces systèmes fonctionnels S comprend une pluralité d'équipements EQ, et une unité 5 de commande et de détection connectée aux équipements EQ.

Certains des équipements sont déposables, i.e. peuvent être démontés de l'aéronef 2, par exemple en vue de leur maintenance. Ces équipements déposables ne sont généralement pas affectés de manière définitive à l'aéronef 2, mais peuvent être affectés, après leur dépose et réparation, à un autre aéronef de la flotte.

Chaque unité 5 de commande et de détection est avantageusement munie de systèmes de surveillance du bon fonctionnement des équipements EQ.

L'aéronef 2 comprend par ailleurs au moins un ordinateur central 6 de maintenance, relié aux systèmes fonctionnels S par un bus numérique.

Les équipements EQ sont susceptibles de présenter une ou plusieurs anomalies, pouvant engendrer un ou plusieurs symptômes de pannes observables sur l'aéronef. Les unités 5 sont propres à analyser ces symptômes, et à générer à destination de l'ordinateur central 6 des labels de panne ou d'état, transformés en messages de panne ou d'état par l'ordinateur central 6.

Ces messages de panne indiquent notamment dans quel système fonctionnel S de l'aéronef un symptôme de panne a été constaté, et quel est ce symptôme. Cependant, les symptômes analysés, donc les messages de panne, peuvent être communs à plusieurs anomalies d'un équipement donné ou encore à plusieurs anomalies de plusieurs équipements distincts. Ainsi, chaque message de panne n'est généralement pas associé à une unique anomalie d'un unique équipement.

L'ordinateur central 6 est propre à stocker les messages de panne générés lors d'une mission et à en générer l'affichage, notamment en cockpit. L'ordinateur central 6 est également propre à transmettre l'ensemble des messages de panne et d'état générés lors d'une mission vers le module 1 d'analyse, à l'issue de la mission.

Le module 1 d'analyse comprend un calculateur 10 comportant des moyens de mise en oeuvre du procédé, des moyens 11 d'interface homme machine, et des moyens 12 de télécommunication.

Les moyens 11 d'interface homme machine comprennent des moyens 14 de visualisation et des moyens 16 de saisie d'informations par un opérateur. Les moyens 14 de visualisation comprennent un écran 18 et des moyens de traitement de l'information graphique, par exemple un processeur 20 et une mémoire 22 associée. L'écran 18 est par exemple un écran tactile. Ainsi, les moyens 16 de saisie comprennent des moyens de détection de la position d'un ou plusieurs organes de commande sur l'écran 18. De manière connue, ces organes de commande peuvent être un stylet ou les doigts d'un opérateur.

Le processeur 20 est également apte à effectuer des opérations de traitement des requêtes saisies par l'opérateur par l'intermédiaire de l'interface 16.

Les moyens 12 de télécommunication comprennent une interface réseau permettant au module 1 de communiquer avec d'autres dispositifs informatiques connectés à un réseau commun 23, selon une liaison filaire ou sans fil.

En particulier, les moyens 12 de télécommunication sont propres à recevoir des données émises par l'ordinateur central 6 de l'aéronef 2.

Le calculateur 10 comprend un processeur 26, et une ou plusieurs mémoire(s) 28. Le calculateur 10 est propre à échanger des données avec des systèmes connectés au réseau 23 via les moyens 12 de télécommunication.

Le processeur 26 est adapté pour exécuter des applications contenues dans la mémoire 28, notamment un système d'exploitation permettant le fonctionnement classique d'un système informatique.

La mémoire 28 comprend différentes zones de mémoire contenant d'une part un fichier d'index 34 et d'autre part des applications destinées à être exécutées par le processeur 26.

Les moyens de télécommunication 12 sont connectés à des informations de maintenance 29, comportant une base de données 30 de restitution technique, une base de données 32 de gestion de maintenance et une source documentaire 25.

La base de données 30 de restitution technique comprend des informations relatives aux messages de panne enregistrés lors de missions antérieures d'aéronefs de la flotte, et qui ont été restituées à l'issue de ces missions. Ces informations sont structurées : chaque message de panne est caractérisé par un identifiant et un libellé indiquant le système fonctionnel S incriminé, éventuellement un identifiant et un libellé d'équipement, des noms de mots de panne, et des numéros et libellés de bits de panne, par exemple le message de panne ECS-CFW1-12: pression coolanol® insuffisante. « ECS » désigne le système conditionnement, « CFW1 » correspond au mot de panne n °1, « 12 » correspond au bit de panne.

La base de données 32 de gestion de maintenance comprend des informations relatives au suivi des aéronefs de la flotte à l'issue de missions réalisées par ces aéronefs. Cette base de données 32 de gestion de maintenance comprend notamment les remarques formulées, au retour de chaque mission considérée, par le pilote de l'aéronef et par l'opérateur qui a pris en charge l'aéronef. Ces remarques se présentent sous la forme de textes libres, de courte longueur. Il s'agit par exemple d'une fuite coolanol® constatée par le mécanicien en visite après vol ou d'un signal ambre conditionnement reporté par le pilote lors de son débriefing. La base de données 32 de gestion de maintenance comprend également des informations relatives aux opérations de maintenance réalisées sur les aéronefs de la flotte et sur les équipements de l'aéronef dans le cadre de sa remise en l'état. Ces opérations de maintenance incluent à la fois les interventions réalisées sur l'aéronef lui-même, les opérations de dépose d'équipements de l'aéronef et les interventions réalisées sur les équipements déposés.

La source documentaire 25 est constituée de documents techniques relatifs au suivi et à la maintenance des aéronefs, tels que des courriers, des notes et directives techniques, des bulletins, des rapports, des photos, et des emails concernant des faits techniques, i.e. des anomalies particulières ou des pannes difficiles à localiser. Cette source documentaire est susceptible de contenir des informations permettant d'identifier, à partir d'un message de panne enregistré lors d'une mission d'un aéronef, l'anomalie à la source de ce message.

Ainsi, le processeur 26 a accès à trois sources d'informations distinctes, qui sont la base de données 30 de restitution technique, la base de données 32 de gestion de maintenance, et la source de documents techniques 25. Ces sources d'informations sont complémentaires.

La mémoire 28 comprend des données d'indexation, par exemple stockées sous la forme d'un fichier d'index 34. Le fichier d'index 34 comprend d'une part un ensemble de mots clés pertinents relatifs à des messages de panne ou des équipements d'aéronefs, et d'autre part l'ensemble des données pertinentes vis-à-vis de toutes les requêtes pouvant être exécutées par l'utilisateur par l'intermédiaire de l'interface 16.

La mémoire 28 comprend par ailleurs une application d'indexation 40, une application de recherche 42, et une application de restitution 44, destinées à être exécutées par le processeur 26.

L'application d'indexation 40 est propre à générer ou à mettre à jour le fichier d'index 34, à partir des données contenues dans les bases de données de restitution technique 30 et de gestion de maintenance 32 et des données comprises dans la source documentaire 25.

L'application de recherche 42 a accès au fichier d'index 34. Elle est propre à rechercher dans le fichier d'index 34, et à partir d'une ou plusieurs requête(s) de recherche relative(s) à une panne d'un aéronef, des informations susceptibles de permettre une identification d'anomalies ayant conduit à l'observation de cette panne, selon un critère de pertinence choisi.

Chaque requête de recherche est définie par un critère de recherche, spécifiant les termes sur lesquels la recherche doit être effectuée, et un type de requête, déterminant le critère de pertinence lors de la recherche d'informations, c'est-à-dire le type d'informations recherchées dans le fichier d'index 34.

Le critère de recherche est par exemple un message de panne M₀ enregistré par l'ordinateur central 6 de l'aéronef 2 lors d'une mission de cet aéronef, et transmis au module 1 d'analyse à l'issue de cette mission en vue de la maintenance de l'aéronef 2. Le critère de recherche peut également comprendre un mot ou un fragment de texte saisi par un opérateur par l'intermédiaire des moyens 16 de saisie.

Le type de la requête demandée définit le type de recherche effectuée par l'application de recherche 42. Il est par exemple choisi par l'opérateur, par l'intermédiaire des moyens 16 de saisie, en fonction notamment du message de panne M₀ qu'il cherche à analyser et de son expérience personnelle.

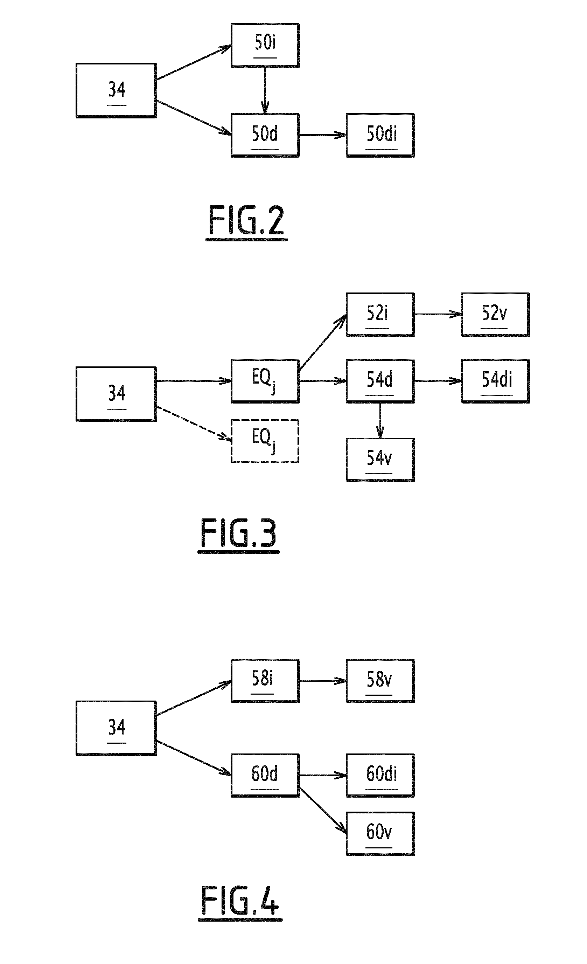

Un premier type de requête, appelée requête d'occurrence de panne, est illustré sur la Figure 2.

Ce premier type de requête est associé à un premier critère de pertinence selon lequel l'application de recherche 42 recherche dans le fichier d'index 34, pour un message de panne M₀ donné associé à un système fonctionnel S₀ donné (par exemple le circuit carburant, les trains d'atterrissage...), les missions antérieures lors desquelles des symptômes identiques, i.e. des messages de panne similaires au message M₀, avaient été constatés, et les opérations de maintenance qui avaient été réalisées sur l'aéronef incriminé à la suite de ces missions.

Cette recherche est effectuée dans le fichier d'index 34.

L'application 42 est ainsi propre à extraire du fichier d'index 34 des informations relatives aux interventions 50i effectuées sur l'aéronef incriminé, aux équipements 50d du système fonctionnel incriminé qui avaient été déposés, et aux interventions 50di qui avaient été réalisées sur les équipements déposés.

Ce type de requête permet de déterminer, lors de l'analyse par un opérateur d'un message de panne donné, quelles solutions avaient été trouvées pour résoudre ce même message de panne M₀ lors d'opérations de maintenance antérieures.

Un deuxième type de requête, appelée requête d'historique d'équipement, est illustré sur la Figure 3.

Ce deuxième type de requête est associé à un deuxième critère de pertinence selon lequel l'application de recherche 42 détermine, pour un système fonctionnel donné S₀ de l'aéronef 2 (soit sélectionné par l'utilisateur par l'intermédiaire de l'interface 16, soit sélectionné par le processeur 26 car correspondant à un message de panne émis), quels équipements EQⱼ sont montés sur le système fonctionnel S₀ et quelles opérations de maintenance ont été antérieurement réalisées en lien avec ces équipements EQⱼ.

A cette fin, l'application de recherche 42 est propre à extraire du fichier d'index 34, les références (notées PN pour « Part Number ») et les numéros de série (notés SN pour « Serial Number ») de chaque équipement EQⱼ du système fonctionnel S₀. L'application de recherche 42 est alors propre à déterminer, à partir du fichier d'index 34, un historique de chacun de ces équipements EQⱼ.

Comme précédemment indiqué, ces équipements EQⱼ de l'aéronef 2 ne sont pas affectés de manière exclusive à l'aéronef 2, mais peuvent être affectés successivement à divers aéronefs de la flotte. L'historique de chaque équipement EQⱼ comprend ainsi des informations 52i relatives aux interventions de maintenance réalisées sur tout aéronef de la flotte incorporant cet équipement, des informations 54d relatives aux actions de dépose de cet équipement ainsi que des informations 54di relatives aux interventions réalisées sur cet équipement une fois celui-ci déposé. Cet historique comprend en outre, pour chacune des opérations de maintenance ainsi répertoriée, les données de vol 52v et 54v (c'est à dire les messages de panne) qui avaient été enregistrées lors de la mission précédant ces opérations. Par exemple lors du vol d'un avion, les messages de panne suivants ont été enregistrés : ECS-CFW1-12, Pression coolanol® insuffisante voie 1, ECS-CFW2-12, Pression coolanol® insuffisante voie 2.

Ce type de requête permet ainsi de déterminer, pour un message de panne M₀ incriminant un système fonctionnel S₀ donné, l'historique de chacun des équipements EQⱼ de ce système fonctionnel, afin de détecter, par exemple, un équipement particulier qui générerait un message de panne de manière récurrente.

Un troisième type de requête, appelée requête d'historique d'aéronef, est illustré sur la Figure 4.

Ce troisième type de requête est associé à un troisième critère de pertinence selon lequel l'application de recherche 42 détermine, pour un système fonctionnel donné S₀ de l'aéronef 2 (soit sélectionné par l'utilisateur par l'intermédiaire de l'interface 16, soit sélectionné par le processeur 26 car correspondant à un message de panne émis), quelles opérations de maintenance ont été antérieurement réalisées sur l'aéronef 2 en relation avec le système fonctionnel S₀ incriminé.

A cette fin, l'application 42 est propre à déterminer, à partir du fichier d'index 34, un historique des opérations de maintenance réalisées sur l'aéronef 2 en relation avec le système fonctionnel S₀. Cet historique comprend des informations 58i relatives aux interventions réalisées directement sur l'aéronef 2, des informations 60d relatives aux déposes d'équipements effectuées, et pour chacune de ces déposes, des informations 60di relatives aux éventuelles interventions réalisées sur l'équipement déposé. Cet historique comprend en outre, pour chacune des opérations de maintenance ainsi répertoriée, les données de vol 58v, 60v qui avaient été enregistrées lors de la mission précédant ces opérations.

Cette requête d'historique d'aéronef diffère de la requête d'historique d'équipement en ce qu'elle n'est pas focalisée sur les opérations de maintenance associées à un équipement individué (identifié par sa référence et son numéro de série), mais sur celles associées à l'aéronef 2, quels que soient ses équipements.

La requête d'historique d'aéronef permet ainsi de déterminer l'historique des opérations de maintenance réalisées sur l'aéronef 2, en relation avec le système fonctionnel S₀, indépendamment des équipements qu'il intègre, et d'identifier, par exemple, un message de panne récurrent qui ne serait pas dû aux équipements EQⱼ du système fonctionnel S₀ mais à l'aéronef 2 lui-même.

En effet, un message de panne issu d'un système fonctionnel S₀, s'il est constaté quels que soient les équipements montés sur ce système fonctionnel S₀, tend à incriminer l'aéronef lui-même (par exemple son câblage, ses circuits pneumatiques, hydrauliques, etc).

Un quatrième type de requête, appelée requête en texte intégral, peut également être mis en oeuvre par l'application de recherche 42. Cette requête en texte intégral est avantageusement associée à un critère de recherche comprenant un mot ou un fragment de texte saisi par l'opérateur, éventuellement associé à un message de panne. Lorsque ce type de requête est sélectionné, l'application de recherche 42 est propre à extraire du fichier d'index 34, les informations relatives à toutes les opérations de maintenance qui ont donné lieu à des remarques contenant ce mot ou ce fragment de texte.

L'application de recherche 42 comprend à cette fin des moyens d'analyse sémantique propres à rechercher dans le fichier d'index 34 non seulement le(s) mot(s) objet(s) du critère de recherche (par exemple « train »), mais également tout terme ou expression associée à ce(s) mot(s) par un lien de synonymie (par exemple les termes « atterrisseur » et « undercarriage »), d'association (par exemple les termes « sortie », « rentrée », « trappes » et « atterrissage ») ou de composition (par exemple les termes « roues », « jambes » et « amortisseurs »). Ces moyens d'analyse sémantique permettent d'améliorer la pertinence du résultat de la requête en texte intégral.

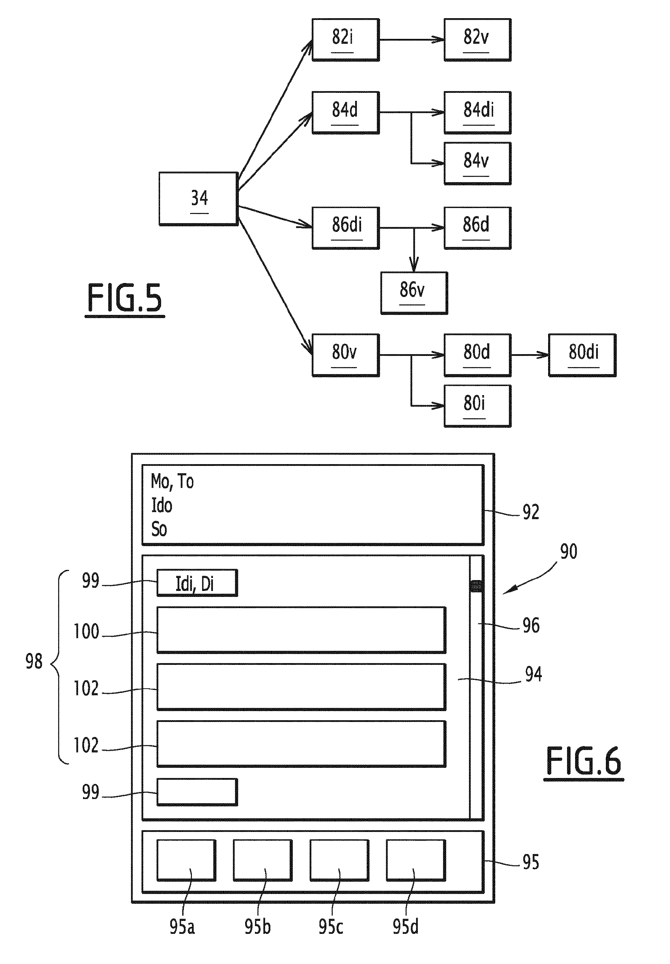

Comme illustré sur la Figure 5, les informations extraites par l'application de recherche 42 comprennent les données de vol 80v faisant apparaître le critère de recherche ou tout terme associé. Elles comprennent également les informations relatives à des interventions 82i réalisées sur des aéronefs, à des opérations 84d de dépose d'équipements et à des interventions 86di sur des équipements déposés, faisant apparaître le critère de recherche ou tout terme associé.

L'application de recherche 42 est par ailleurs propre à extraire du fichier d'index 34, pour chacune des opérations de maintenance 82i, 84d, 86di ainsi répertoriée, les données de vol 82v, 84v, 86v qui avaient été enregistrées lors de la mission précédant cette opération.

De plus, l'application de recherche 42 est propre à extraire du fichier d'index 34, pour chacune des opérations 84d de dépose d'équipements répertoriée, des informations 84di relatives aux interventions réalisées par la suite sur les équipements déposés.

De même, l'application de recherche 42 est propre à extraire du fichier d'index 34, pour chacune des interventions 86di sur des équipements répertoriées, des informations 86d relatives aux opérations de dépose ayant précédé ces interventions.

En outre, l'application de recherche 42 est propre à extraire du fichier d'index 34, pour chacune des données de vol 80v répertoriée, des informations relatives aux interventions 80i réalisées sur aéronef à l'issue du vol concerné, ainsi que des informations 80d, 80di relatives respectivement à des opérations de dépose d'équipements et à des interventions sur les équipements déposés à l'issue du vol concerné.

L'application de restitution 44 a pour fonction de piloter l'affichage d'éléments d'une interface graphique, notamment d'en générer une représentation et de mettre à jour ces éléments en réponse à des actions d'un ou plusieurs opérateurs via les moyens 16 de saisie d'informations.

Ainsi, l'application de restitution 44 est propre à commander l'affichage sur l'écran 18, sous une forme ordonnée, de résultats d'une recherche mise en oeuvre par l'application de recherche 42 sur la base d'un ou plusieurs des types de requête mentionnés ci-dessus.

On a représenté sur la Figure 6 une interface graphique affichée sur l'écran 18, dont l'affichage est piloté par l'application de restitution 44.

Cette interface graphique comprend une fenêtre 90 d'affichage de résultats de recherche.

La fenêtre 90 comprend un cadre supérieur 92 dans lequel sont récapitulées des informations relatives à la recherche effectuée. Ces informations comprennent notamment le critère de recherche utilisé, c'est-à-dire le message de panne M₀ dont l'opérateur cherche la cause et éventuellement un mot ou un fragment de texte T₀ saisi par l'opérateur pour compléter ce message de panne. Ces informations comprennent en outre un identifiant Id₀ désignant l'aéronef 2 sur lequel le message de panne M₀ a été relevé, ainsi que le système fonctionnel S₀ mis en cause par ce message de panne.

La fenêtre 90 comprend en outre un cadre intermédiaire 94 dans lequel sont affichés les résultats des recherches effectuées au moyen de l'application de recherche 42, et un cadre inférieur 94 affecté au choix par l'opérateur du type de requête dont il souhaite voir afficher les résultats.

Le cadre inférieur 95 comprend à ces fins quatre boutons actionnables 95a, 95b, 95c et 95d, chacun de ces boutons étant assigné à un des types de requête susmentionnés. Ainsi, l'actionnement de chacun des boutons 95a, 95b, 95c et 95d provoque l'affichage par l'application de restitution 44, dans le cadre intermédiaire 94, des résultats d'une recherche effectuée par l'application de recherche 42 sur la base de la requête de recherche définie par le critère de recherche affiché dans le cadre supérieur 92 et du type de requête associé au bouton 95a, 95b, 95c ou 95d actionné. Le cadre intermédiaire 94 comprend une barre de défilement 96, permettant de faire défiler verticalement le contenu du cadre.

Dans le cadre intermédiaire 94, les résultats de chaque recherche sont affichés de manière organisée, de manière à permettre un accès immédiat par un opérateur à l'ensemble des informations relatives aux événements techniques et logistiques relatifs à un aéronef donné pour une date donné, ou à un équipement donné.

Ces résultats sont ainsi affichés sous la forme de blocs 98.

Lorsque la requête demandée par l'opérateur est de type « requête d'occurrence de panne », « requête d'historique d'aéronef » ou « requête en texte intégral », chacun de ces blocs 98 regroupe l'ensemble des informations extraites du fichier d'index 34 se rapportant à des opérations de maintenance effectuées sur un aéronef donné à une date donnée.

Chaque bloc 98 comprend ainsi un en-tête 99 dans lequel sont affichés un identifiant Idi d'un aéronef et la date Di à laquelle les opérations de maintenance relevées ont été effectuées. Les informations affichées dans chaque bloc 98 comprennent alors les informations relatives aux interventions réalisées sur cet aéronef, aux déposes d'équipements, aux interventions sur les équipements déposés et aux données de vol enregistrées lors de la mission réalisée à la date identifiée. Les blocs 98 sont affichés dans le cadre intermédiaire 94 selon un ordre chronologique, les blocs relatifs à des opérations de maintenance récentes étant affichés au-dessus des blocs relatifs à des opérations de maintenance plus anciennes.

Lorsque la requête demandée par l'opérateur est de type « requête d'historique d'équipement », chacun des blocs 98 regroupe l'ensemble des informations extraites du fichier d'index 34 se rapportant à des opérations de maintenance effectuées sur un équipement donné du système S₀ incriminé. Chaque bloc 98 comprend ainsi un en-tête dans lequel sont affichés la référence PNj et le numéro de série SNj d'un équipement EQj. Les informations affichées dans chaque bloc 98 comprennent alors les informations 52i relatives aux interventions de maintenance réalisées sur les aéronefs de la flotte ayant incorporé cet équipement EQj, les informations 54d relatives aux actions de dépose de cet équipement EQj ainsi que des informations 54di relatives aux interventions réalisées sur cet équipement EQj une fois celui-ci déposé. Sont également affichées, sous chacune des opérations de maintenance ainsi répertoriées, les données de vol 52v et 54v qui avaient été enregistrées lors de la mission précédant ces opérations.

Au sein de chacun des blocs 98, les informations extraites du fichier d'index 34 sont classées par niveau d'intervention, ceci afin de respecter la chronologie des étapes de dépannage. Sont ainsi affichées en premier lieu les informations relatives aux tests effectués, puis celles relatives aux équipements déposés et aux interventions sur ces équipements.

Dans l'exemple représenté sur la Figure 6, le cadre intermédiaire 94 affiche des résultats d'une requête du type « requête d'occurrence de panne ».

Chaque bloc 98 comprend ainsi une première zone 100 dans laquelle sont affichées les informations 50i relatives aux interventions réalisées sur l'aéronef Idi identifié dans l'en-tête 99 à la date Di indiquée dans cet en-tête, ainsi que des données de vol 50v qui avaient été enregistrées lors de la mission précédant ces opérations et qui sont en relation avec le système S₀ incriminé.

Chaque bloc 98 comprend également une pluralité de zones 102 dans chacune desquelles sont affichées des informations relatives à un équipement EQj du système fonctionnel S₀ déposé et aux interventions réalisées sur cet équipement EQj suite à sa dépose.

L'application de restitution 44 permet ainsi d'afficher, à destination de l'opérateur, les informations extraites au moyen de l'application de recherche 42, et ce de manière synthétique. En effet, les informations extraites de chacune des bases de données de restitution technique 30, de gestion de maintenance 32, et de documents techniques 25, ne sont pas affichées séparément les unes de autres, mais sont mises en correspondance, de telle sorte que l'opérateur peut visualiser sans aucun travail supplémentaire quelles solutions ont été apportées suite à quel type de message de panne.

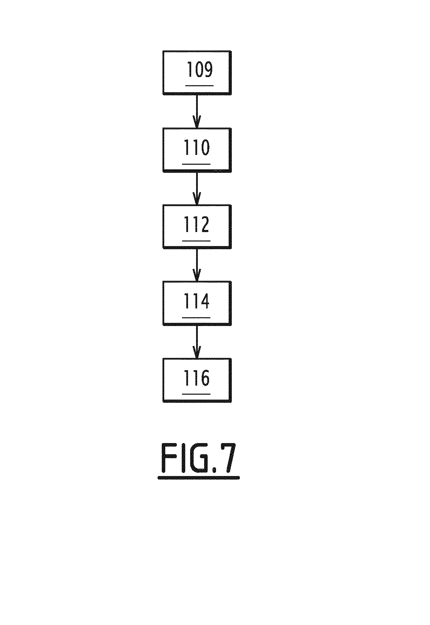

En référence à la Figure 7, la mise en oeuvre d'un procédé selon un mode de réalisation de l'invention, pour l'analyse d'au moins un message de panne constaté lors d'une mission d'un aéronef 2, va maintenant être décrite.

Ce procédé comprend une étape 109 d'indexation, mise en oeuvre de manière répétée par le processeur 26 correspondant au besoin de mise à jour (par exemple une fois par jour). En effet, lors de cette étape 109, le processeur 26 met en oeuvre l'application d'indexation 40 afin de mettre à jour le fichier d'index 34, à partir des données contenues dans les bases de données de restitution technique 30 et de gestion de maintenance 32 stockées dans la mémoire 28 et des données comprises dans les documents techniques. Cette étape 109 est avantageusement mise en oeuvre régulièrement de manière à ce que l'écart entre son contenu et celui des bases de données 30, 32 et 25 soit le plus faible possible.

Lors d'une étape 110 d'initialisation d'une analyse de panne, mise en oeuvre à l'issue d'une mission réalisée par l'aéronef 2, les messages de panne enregistrés lors de cette mission par l'ordinateur central 6 sont transférés vers le module 1 d'analyse, via les moyens 12 de télécommunication, et enregistrés dans la mémoire 28. Les données de ce vol viendront alimenter le fichier d'index 34 lors de sa prochaine mise à jour.

Lors d'une étape 112, l'opérateur définit, via les moyens 16 de saisie d'informations, la ou les requête(s) de recherche sur la base de laquelle ou desquelles il souhaite qu'une recherche soit effectuée, cette recherche peut par exemple avoir pour objectif de traiter les messages de panne provenant de la dernière mission effectuée.

Dans un tel cas, l'opérateur spécifie les critères de recherche, en sélectionnant un des messages de panne M₀ constaté lors de la mission de l'aéronef 2, associé à un système fonctionnel S₀ de l'aéronef 2. Si nécessaire, l'opérateur renseigne également des informations, sous la forme d'un mot ou d'un fragment de texte T₀, sur lesquels il souhaite que la recherche porte spécifiquement. Ces informations sont par exemple des précisions sur la panne apportées par le pilote, permettant d'orienter la recherche.

L'opérateur peut également sélectionner un système fonctionnel de son choix indépendamment des messages de panne M₀.

Par ailleurs, lors de l'étape 112, l'opérateur sélectionne les types de requête souhaités. Par défaut, les quatre types de requêtes définis ci-dessus sont sélectionnés.

Lors d'une étape 114, l'application de recherche 42 extrait du fichier d'index 34, pour chaque type de requête de recherche sélectionnées lors de l'étape 112, des informations susceptibles de permettre une identification d'anomalies ayant conduit à l'observation de cette panne.

En particulier, si le premier type de requête est sélectionné, l'application de recherche 42 recherche dans le fichier d'index 34, les missions antérieures lors desquelles des messages de panne identiques au message M₀ avaient été constatés, et les opérations de maintenance qui avaient été réalisées sur l'aéronef incriminé à la suite de ces missions.

L'application 42 extrait ainsi les informations relatives aux interventions 50i effectuées sur l'aéronef incriminé, aux équipements 50d du système fonctionnel incriminé qui avaient été déposés, et aux interventions 50di qui avaient été réalisées sur les équipements déposés.

Si le deuxième type de requête est sélectionné, l'application de recherche 42 détermine quels équipements sont montés sur le système fonctionnel S₀ et l'historique de maintenance de chacun de ces équipements.

Si le troisième type de requête est sélectionné, l'application de recherche 42 détermine l'historique des opérations de maintenance réalisées sur l'aéronef 2 en relation avec le système fonctionnel S₀ incriminé.

Enfin, si le quatrième type de requête est sélectionné, sur la base d'un mot ou d'un fragment de texte renseigné par l'opérateur lors de l'étape 112, l'application de recherche 42 extrait du fichier d'index 34, les informations relatives à toutes les opérations de maintenance qui ont donné lieu à des remarques contenant ce mot ou ce fragment de texte.

Pour chacun des types de requête, l'application de recherche 42 explore non seulement le fichier d'index 34, mais effectue également une mise en correspondance des informations issues de ce fichier.

Ainsi, l'application de recherche 42 associe au sein du fichier d'index 34 chaque message de panne extrait de la base de données de restitution technique 30 les informations de maintenance correspondantes extraites de la base de données de gestion de maintenance 32, c'est-à-dire les opérations de maintenance effectuées suite à ce message de panne, et éventuellement les documents techniques extraits de la source de documents techniques 25 qui sont liés à ce message de panne.

Cette mise en correspondance permet ainsi de fournir à un opérateur une combinaison d'informations pertinentes pour découvrir les anomalies ayant causé un message de panne donné.

A l'issue de l'étape 114, lors d'une étape de restitution 116, l'application de restitution 44 commande l'affichage sur l'écran 18 des informations extraites par l'application de recherche 42 lors de l'étape 114. Ces résultats sont affichés sur l'écran 18 sous la forme d'une fenêtre 90 d'affichage de résultats de recherche conforme à celle décrite en référence à la Figure 6.

Notamment, l'actionnement par l'opérateur de chacun des boutons 95a, 95b, 95c et 95d provoque l'affichage par l'application de restitution 44, dans le cadre intermédiaire 94, des résultats de la recherche effectuée par l'application de recherche 42 sur la base de la requête de recherche associée au bouton 95a, 95b, 95c ou 95d actionné. Cependant, si l'un ou plusieurs des types de requêtes ne sont pas sélectionnés par l'opérateur lors de l'étape 112, le(s) bouton(s) associés à cette ou à ces types de requête(s) ne sont pas actionnables.

Le module et le procédé selon l'invention permettent ainsi de restituer de manière pertinente et exploitable les informations contenues dans les diverses bases de données d'informations à la disposition de l'équipe de maintenance. En particulier, le module et le procédé selon l'invention permettent d'extraire des bases de données des résultats exhaustifs, les informations extraites correspondant à l'ensemble des cas similaires et des informations technico-logistiques associées présentes dans ces bases de données.

De plus, le module et le procédé selon l'invention permettent de créer des associations entre les données extraites des différentes bases de données, afin d'exploiter au mieux ces données. Par ailleurs, grâce au fichier d'index, la recherche des informations pertinentes se fait rapidement, de telle sorte que l'analyse des symptômes est accessible dans l'instant pour un opérateur.

Il devra être compris que les exemples de réalisation présentés ci-dessus ne sont pas limitatifs.

En particulier, l'invention a été décrite en référence à une flotte d'aéronefs, mais peut être mise en oeuvre relativement à un ensemble d'appareils autres.

## Revendications

1. Module (1) d'analyse d'au moins un message de panne (M₀) généré par un appareil (2) d'un ensemble d'appareils, lesdits appareils comportant une pluralité de systèmes fonctionnels (S) incluant un ou plusieurs équipements (EQ), ledit module d'analyse (1) étant **caractérisé en ce qu'il** comprend :
- un calculateur (10), comprenant :
- des moyens d'accès (12) à des informations de maintenance (29) dudit ensemble d'appareils, comprenant des informations d'une base de données (30) de messages de panne antérieurs audit message de panne (M₀) enregistrés lors de missions d'appareils dudit ensemble, et des informations d'une base de données (32) d'opérations de maintenance réalisées sur des appareils dudit ensemble,
- des moyens d'analyse (40, 42) propres à déterminer sur la base desdites informations de maintenance (29), en fonction d'au moins une requête de recherche, des informations pertinentes pour permettre l'analyse dudit message de panne (M₀), selon un critère de pertinence associé à la requête de recherche,
- des moyens de restitution (44), propres à afficher à destination d'un opérateur des données déterminées en fonction desdites informations pertinentes,
et **en ce que** la requête de recherche est d'un type donné parmi :
- un premier type de requête de recherche associé à un premier critère de pertinence selon lequel lesdites informations sont pertinentes si elles comprennent des premières informations relatives à des messages de panne antérieurs similaires audit message de panne (M₀),
- ledit message de panne étant associé à au moins un système fonctionnel (S₀) dudit appareil (2) comprenant au moins un équipement (EQⱼ), un deuxième type de requête de recherche associé à un deuxième critère de pertinence selon lequel lesdites informations sont pertinentes si elles comprennent des deuxièmes informations relatives à des opérations de maintenance antérieurement réalisées sur ledit ou chaque équipement (EQⱼ) dudit système fonctionnel (S₀) sur ledit appareil (2) ou un autre appareil dudit ensemble,
- ledit message de panne étant associé à au moins un système fonctionnel (S₀) dudit appareil (2), un troisième type de requête de recherche associé à un troisième critère de pertinence selon lequel lesdites informations sont pertinentes si elles comprennent des troisièmes informations relatives à des opérations de maintenance réalisées sur ledit appareil (2) affectant ledit système fonctionnel (S₀).

2. Module d'analyse selon la revendication 1, **caractérisé en ce que** lesdits moyens d'analyse (40, 42) comprennent :
- des moyens d'indexation (40) desdites informations de maintenance (29), propres à générer et à mettre à jour de manière répétée un fichier d'index (34) sur la base desdites informations de maintenance (29),
- des moyens de recherche (42) propres à extraire dudit fichier d'index (34) lesdites informations pertinentes.

3. Module (1) d'analyse selon l'une quelconque des revendications 1 ou 2, **caractérisé en ce que** lesdites premières informations sont pertinentes si elles comprennent des informations relatives à des opérations de maintenance effectuées à la suite de chacun desdits messages de panne antérieurs similaires audit message de panne (Mo).

4. Module (1) d'analyse selon l'une quelconque des revendications 1 à 3, **caractérisé en ce que** lesdites deuxièmes informations sont pertinentes si elles comprennent, pour le ou chaque équipement (EQⱼ), des informations (52i) relatives à des interventions de maintenance réalisées sur des appareils dudit ensemble ayant incorporé ledit équipement (EQⱼ), et/ou des informations (54d) relatives à des déposes dudit équipement (EQⱼ) et/ou des informations (54di) relatives à des interventions réalisées sur ledit équipement (EQⱼ) déposé.

5. Module (1) d'analyse selon l'une quelconque des revendications 1 à 4, **caractérisé en ce que** lesdites troisièmes informations sont pertinentes si elles comprennent des informations (58i) relatives à des interventions de maintenance réalisées sur ledit appareil (2), et/ou des informations (60d) relatives à des déposes d'équipements dudit appareil (2), et/ou des informations (60di) relatives à des interventions réalisées sur les équipements déposés dudit appareil (2).

6. Module (1) d'analyse selon l'une quelconque des revendications 1 à 5, **caractérisé en ce que** lesdits moyens de restitution (44) comprennent des moyens de sélection (94), par un opérateur, d'un type de requête parmi lesdits premier et/ou deuxième et/ou troisième types, et des moyens d'affichage sélectifs desdites premières et/ou deuxièmes et/ou troisièmes informations respectivement.

7. Module (1) d'analyse selon l'une quelconque des revendications précédentes, **caractérisé en ce que** lesdites informations de maintenance (29) comprennent en outre des documents techniques (25) relatifs à la maintenance des appareils dudit ensemble d'appareils.

8. Module (1) d'analyse selon la revendication 7, **caractérisé en ce que** lesdits moyens d'analyse (40, 42) sont propres à extraire desdites informations de maintenance (29), en fonction d'au moins une requête de recherche, des informations pertinentes relatives à des opérations de maintenance qui ont donné lieu à des remarques contenant au moins un mot prédéterminé.

9. Module (1) d'analyse selon l'une quelconque des revendications précédentes, **caractérisé en ce que** lesdites informations pertinentes comprennent des messages de panne pertinents extraits de ladite base de données de messages de panne et des informations relatives à des opérations de maintenance pertinentes extraites de ladite base de données (32) d'opérations de maintenance et **en ce que** lesdits moyens (40, 42) de recherche sont propres à associer à chacun desdits messages de panne pertinents des informations relatives à des opérations de maintenance pertinentes réalisées à la suite de chacun desdits messages de panne pertinents.

10. Module (1) d'analyse selon l'une quelconque des revendications précédentes, **caractérisé en ce que** ledit appareil (2) est un aéronef.

11. Procédé d'analyse d'au moins un message de panne (M₀) généré par un appareil (2) d'un ensemble d'appareils, lesdits appareils comportant une pluralité de systèmes fonctionnels (S) incluant un ou plusieurs équipements (EQ),
ledit procédé d'analyse étant **caractérisé en ce qu'il** comprend une étape d'extraction (114), en fonction d'au moins une requête de recherche, d'informations pertinentes pour permettre l'analyse dudit message de panne (M₀), selon un critère de pertinence associé à la requête de recherche, lesdites informations pertinentes étant extraites d'informations de maintenance (29) dudit ensemble d'appareils comprenant des informations d'une base de données (30) de messages de panne antérieurs audit message de panne (M₀) enregistrés lors de missions d'appareils dudit ensemble, et des informations d'une base de données (32) d'opérations de maintenance réalisées sur des appareils dudit ensemble,
et **en ce que** la requête de recherche est d'un type donné parmi :
- un premier type de requête de recherche associé à un premier critère de pertinence selon lequel lesdites informations sont pertinentes si elles comprennent des premières informations relatives à des messages de panne antérieurs similaires audit message de panne (M₀),
- ledit message de panne étant associé à au moins un système fonctionnel (S₀) dudit appareil (2) comprenant au moins un équipement (EQⱼ), un deuxième type de requête de recherche associé à un deuxième critère de pertinence selon lequel lesdites informations sont pertinentes si elles comprennent des deuxièmes informations relatives à des opérations de maintenance antérieurement réalisées sur ledit ou chaque équipement (EQⱼ) dudit système fonctionnel (S₀) sur ledit appareil (2) ou un autre appareil dudit ensemble,
- ledit message de panne étant associé à au moins un système fonctionnel (S₀) dudit appareil (2), un troisième type de requête de recherche associé à un troisième critère de pertinence selon lequel lesdites informations sont pertinentes si elles comprennent des troisièmes informations relatives à des opérations de maintenance réalisées sur ledit appareil (2) affectant ledit système fonctionnel (S₀).

12. Procédé d'analyse selon la revendication 11, **caractérisé en ce que** ladite étape d'extraction (114) comprend :
- la génération (109) d'un fichier d'index sur la base desdites informations de maintenance (29),
- l'extraction (114) depuis ledit fichier d'index (34) desdites informations pertinentes.

13. Procédé d'analyse selon l'une quelconque des revendications 11 ou 12, **caractérisé en ce qu'il** comprend une étape d'affichage (116), à destination d'un opérateur, de données déterminées en fonction desdites informations pertinentes.

14. Programme d'ordinateur pour un module (1) d'analyse d'au moins un message de panne (M₀) généré par un appareil (2) d'un ensemble d'appareils, lesdits appareils comportant une pluralité de systèmes fonctionnels (S) incluant un ou plusieurs équipements (EQ), ledit module (1) d'analyse comportant des moyens d'accès (10) à des informations de maintenance (29) dudit ensemble d'appareils, comprenant des informations d'une base de données (30) de messages de panne antérieurs audit message de panne (M₀) enregistrés lors de missions d'appareils dudit ensemble, et des informations d'une base de données (32) d'opérations de maintenance réalisées sur des appareils dudit ensemble,
ledit programme d'ordinateur étant **caractérisé en ce qu'il** comprend des instructions logicielles, qui lorsqu'elles sont exécutées par des moyens de calcul (26) dudit module (1) d'analyse, sont propres à extraire (114) desdites informations de maintenance (29), en fonction d'au moins une requête de recherche sélectionnée, des informations pertinentes pour permettre l'analyse dudit message de panne (M₀), selon un critère de pertinence associé à la requête de recherche,
et **en ce que** la requête de recherche est d'un type donné parmi :
- un premier type de requête de recherche associé à un premier critère de pertinence selon lequel lesdites informations sont pertinentes si elles comprennent des premières informations relatives à des messages de panne antérieurs similaires audit message de panne (M₀),
- ledit message de panne étant associé à au moins un système fonctionnel (S₀) dudit appareil (2) comprenant au moins un équipement (EQⱼ), un deuxième type de requête de recherche associé à un deuxième critère de pertinence selon lequel lesdites informations sont pertinentes si elles comprennent des deuxièmes informations relatives à des opérations de maintenance antérieurement réalisées sur ledit ou chaque équipement (EQⱼ) dudit système fonctionnel (S₀) sur ledit appareil (2) ou un autre appareil dudit ensemble,
- ledit message de panne étant associé à au moins un système fonctionnel (S₀) dudit appareil (2), un troisième type de requête de recherche associé à un troisième critère de pertinence selon lequel lesdites informations sont pertinentes si elles comprennent des troisièmes informations relatives à des opérations de maintenance réalisées sur ledit appareil (2) affectant ledit système fonctionnel (S₀).

15. Programme d'ordinateur selon la revendication 14, **caractérisé en ce que** lesdites instructions logicielles, lorsqu'elles sont exécutées par lesdits moyens de calcul (26) dudit module (1) d'analyse, sont propres à générer et à mettre à jour de manière répétée un fichier d'index (34) sur la base desdites informations de maintenance (29), et à rechercher dans ledit fichier d'index (34) lesdites informations pertinentes.
